(19) **Europäisches Patentamt European Patent Office Office européen des brevets**

(11) **EP 2 624 087 B1**

(12) **EUROPEAN PATENT SPECIFICATION**

(45) Date of publication and mention
of the grant of the patent:
**02.09.2015 Bulletin 2015/36**

(51) Int Cl.:
*G05B 19/18* (2006.01)     *G05B 19/401* (2006.01)
*B23D 79/02* (2006.01)

(21) Application number: **12154074.4**

(22) Date of filing: **06.02.2012**

(54) **Method of numerical-control scraping of a work piece**

Verfahren zum numerisch gesteuerten Schaben eines Werkstücks

Procédé de raclage sous contrôle numérique d'une pièce

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2013 Bulletin 2013/32**

(73) Proprietor: **National Formosa University Yunlin Hsien (TW)**

(72) Inventors:
• **Jywe, Wen-Yuh**
**Yunlin Hsien (TW)**
• **Hsieh, Tung-Hsien**
**Yunlin Hsien (TW)**
• **Chen, Chia-Hung**
**Yunlin Hsien (TW)**
• **Huang, Chin-Hui**
**Yunlin Hsien (TW)**
• **Tsai, Ying-Chien**
**Kaohsiung City (TW)**
• **Wang, Yen-Chieh**
**Yunlin Hsien (TW)**

(74) Representative: **Caldwell, Judith Margaret Keltie LLP No.1 London Bridge London SE1 9BA (GB)**

(56) References cited:
**US-A1- 2011 275 280**

EP 2 624 087 B1

**Description**

1. Field of the Invention

The present invention relates to a method of numerical-control scraping of a work piece, and more particularly to a method that can scrape a three-dimensional surface of the work piece accurately.

2. Description of Related Art

In general, a conventional hard rail for a machine tool needs to be scraped before assembling, and a scraping process is used to scrape relative high points of a contacting surface of the conventional hard rail. The scraping process can form multiple recesses on the contacting surfaces of the conventional hard rail. The recesses can be used to store lubricant to lubricate movement of a moving element on the conventional hard rail and this can reduce the friction force between the moving element and the conventional hard rail. Therefore, detecting a surface roughness of the scraped surface is very important to maintain functions of the conventional hard rail, since the surface roughness may affect mobility of the moving element on the conventional hard rail.

A conventional method for determining the surface roughness of the scraped surface comprises the following steps: painting ink on the surface of a standard holder, sliding a work piece on the surface of the standard holder so ink will be removed and be found on high points of a scraped surface of the work piece, scraping the high points of the work piece and measuring differences of height of the high points of the work piece with a measuring tool. The above-mentioned steps are repeated until the differences of height of the high points of the work piece reach the requirement. When the differences of height of the high points of the work piece reach the requirement, multiple recesses are averagely formed on the scraped surface of the work piece, sliding the work piece on the surface of the standard holder so ink will be removed and be found on the scraped surface of the work piece and a charge-couple device (CCD) can be used to screen the inked-and-scraped surface of the work piece to analyze the surface roughness of the work piece to detect the uniformity of the high points distribution of the scraped surface of the work piece.

Though the conventional detecting and scraping method can be used on a work piece of the hard rail, the detecting result of the described conventional method is not precise since the results of the conventional method are easily affected by human error and cannot analyze the work piece accurately.

The main objective of the present invention is to provide a method of numerical-control scraping of a work piece, and more particularly to a method that can scrape a three-dimensional surface of the work piece accurately.

The method of numerical-control scraping of a work piece in accordance with the present invention comprises a preparing step, a scanning step, a flatness-parameter inputting step, a surface-finishing step, a related-parameter inputting step, an auto-scraping step and an analyzing step. The preparing step comprises preparing a multi-axis machine tool, a laser displacement meter, an auto scraping apparatus and a computer. The scanning step comprises moving a loading platform of the multi-axis machine tool relative to a spindle to enable the laser displacement meter to scan the variation of a top surface of the work piece. The flatness-parameter inputting step comprises inputting a flatness-parameter according to a desired flatness of the work piece. The surface-finishing step comprises calculating out the positions, the lengths, the widths and the depths of the to-be-scraped ranges of the work piece and scraping the work piece to reach the desired flatness. The related-parameter inputting step comprises inputting a desired PPI and a desired POP in the computer to calculate out the length and the width of a single scraping process, calculating out the HOP, the DOS and the oil content by an adjusted data of the auto scraping apparatus to calculate out the depth of a single scraping process. The auto-scraping step comprises scraping the work piece to meet the requirement of oil-even-distribution.

The analyzing step comprises scanning the work piece, forming a 3D-appearance drawing in the computer and detecting the 3D-appearance drawing of the work piece.

Document US 2011/0275280 A1 discloses the conventional preparing, scanning, auto-scraping and analyzing steps.

Other objectives, advantages and novel features of the invention will become more apparent from the following detailed description when taken in conjunction with the accompanying drawings.

IN THE DRAWINGS:

Fig. 1 is a block diagram of a method of numerical-control scraping of a work piece in accordance with the present invention;

Fig. 2 is a perspective view of an auto scraping apparatus in accordance with the present invention;

Fig. 3 is an enlarged perspective view of an auto-scraping device in Fig. 2;

Fig. 4 is an enlarged cross-sectional side view of a work piece in accordance with the present invention;
Fig. 5 is an enlarged top view of the work piece in Fig. 4; and
Fig. 6 is an enlarged cross-sectional side view of the work piece in Fig. 4 after scraping.

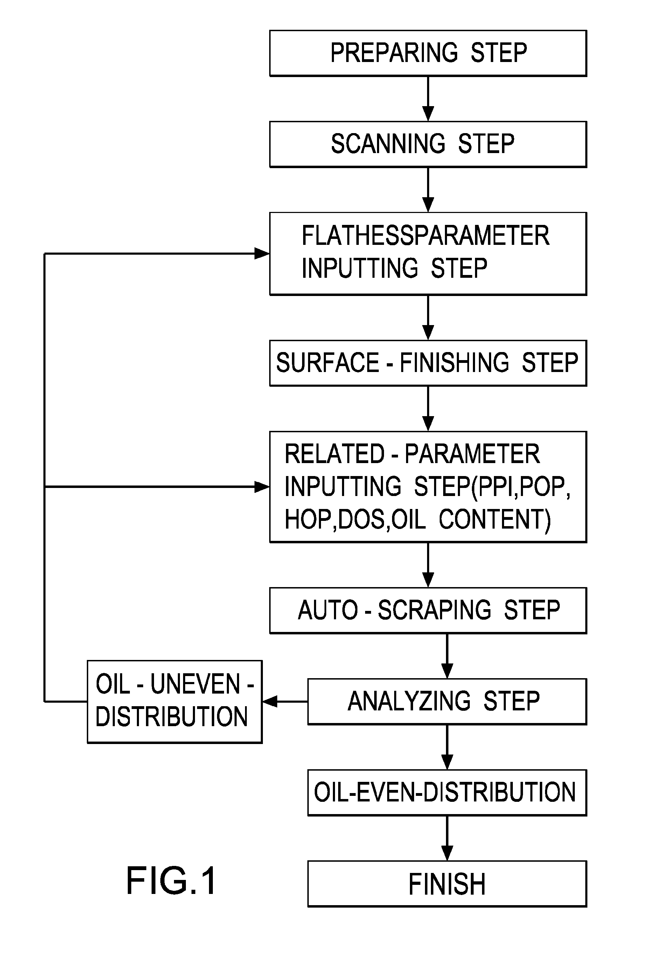

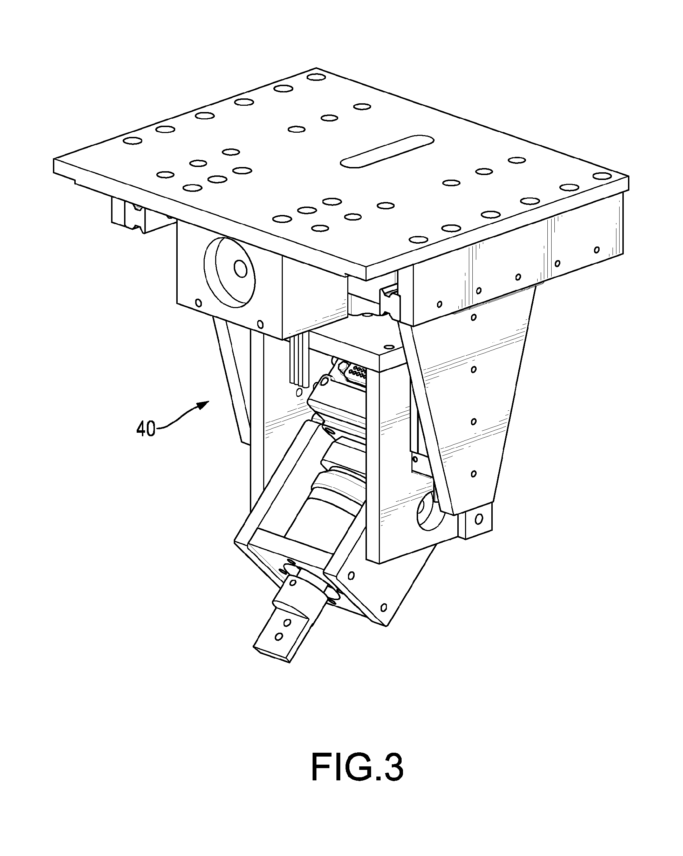

With reference to Figs. 1 to 3, a method of auto scraping a work piece 50 for a hard rail in accordance with the present invention comprises a preparing step, a scanning step, a flatness-parameter inputting step, a surface-finishing step, a related-parameter inputting step, an auto-scraping step and an analyzing step.

The preparing step comprises preparing a multi-axis machine tool 10, a work piece 50, a laser displacement meter 30, an auto scraping apparatus 40 and a computer 20.

The multi-axis machine tool 10 has a top, a bottom, a spindle 11 and a loading platform 12. The spindle 11 is movably mounted on the top of the multi-axis machine tool 10 along the Z-axis of the multi-axis machine tool 10 and has a bottom. The loading platform 12 is movably mounted on the bottom of the multi-axis machine tool 10 along the X-Y axes of the multi-axis machine tool 10 and is mounted below the spindle 11.

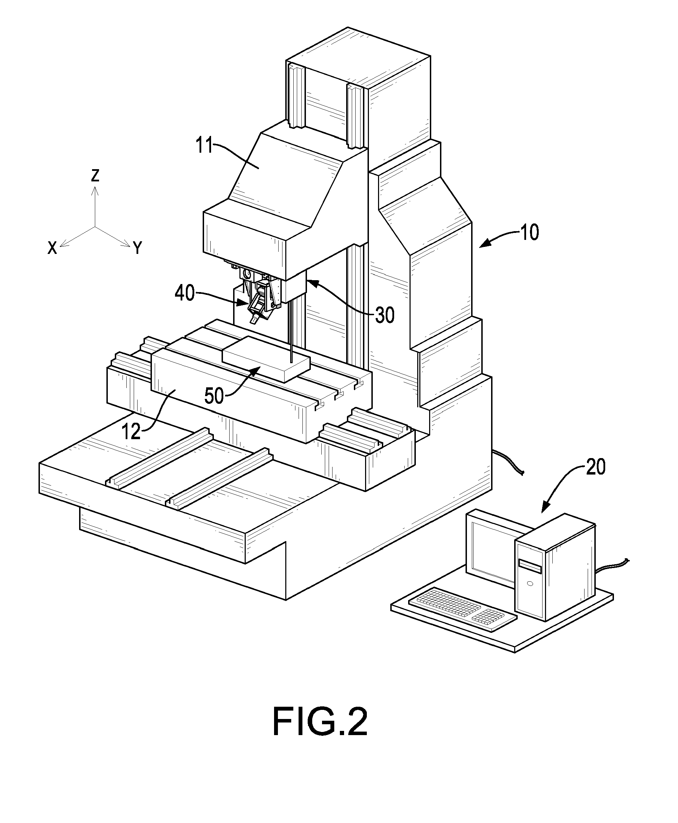

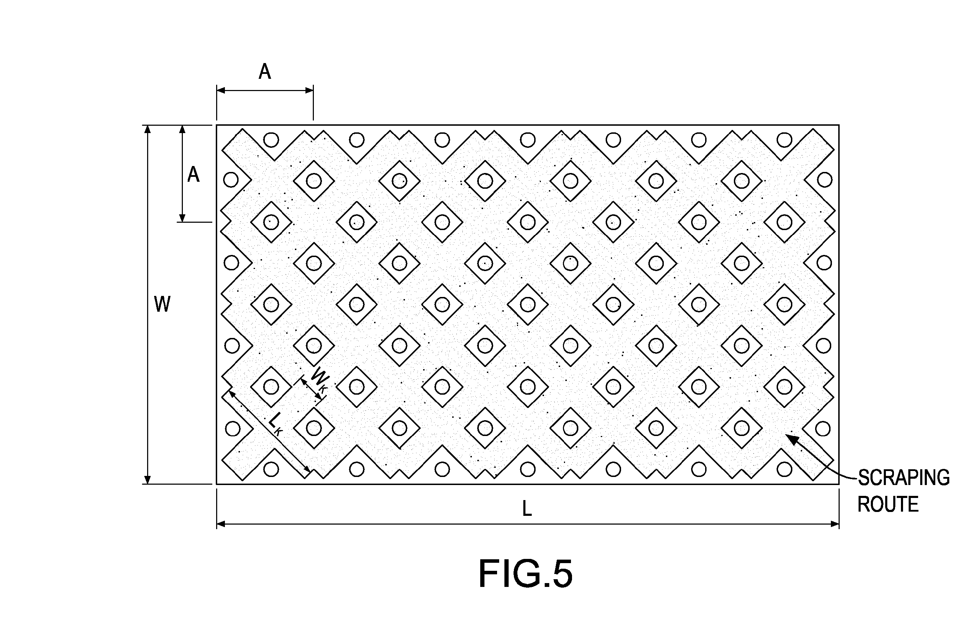

With reference to Figs. 2 and 5, the work piece 50 is mounted securely on the loading platform 12 of the multi-axis machine tool 10 below the spindle 11 and has a top surface. The top surface of the work piece 50 has a length (L) and a width (W), and the area of the top surface of the work piece 50 is L and W multiplied.

The laser displacement meter 30 is securely mounted on the bottom of the spindle 11 above the loading platform 12. After mounting the laser displacement meter 30 on the spindle 11, a height of the spindle 11 is adjusted relative to the loading platform 12 by the multi-axis machine tool 10 to let the valid measurement range of the laser displacement meter 30 cover the whole top surface of the work piece 50.

The auto scraping apparatus 40 is mounted securely on the bottom of the spindle 11 beside the laser displacement meter 30 to scrape the top surface of the work piece 50. The computer 20 is electrically connected to the multi-axis machine tool 10 to control the movements of the spindle 11 and the loading platform 12, is electrically connected to the laser displacement meter 30 to receive the measurement results of the top surface of the work piece 50 and is electrically connected to the auto scraping apparatus 40 to enable the auto scraping apparatus 40 to scrape the top surface of the work piece 50.

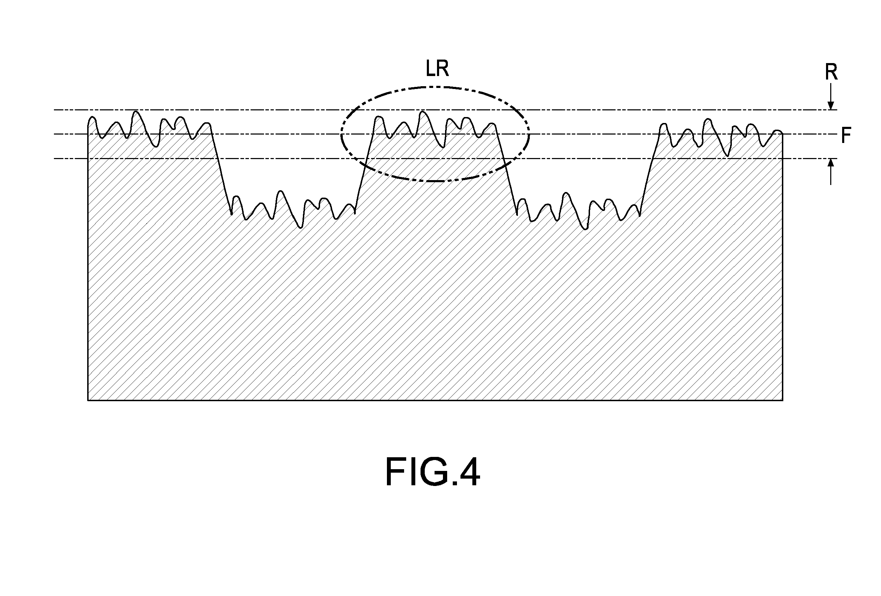

The scanning step comprises moving the loading platform 12 along the X-Y axes of the multi-axis machine tool 10 relative to the spindle 11 to enable the laser displacement meter 30 to scan the variation of the top surface of the work piece 50. Preferably, the loading platform 12 is moved relative to the spindle 11 at a constant speed along an S-shaped route to enable the laser displacement meter 30 to scan the top surface of the work piece 50. After scanning the top surface of the working piece 50, the roughness values (R) of the top surface of the work piece 50 are read by the laser displacement meter 30 and are transferred to the computer 20 to form a three-dimensional appearance drawing of the top surface of the work piece 50 in the computer 20 as shown in Fig. 4. With reference to Fig. 4, in the three-dimensional (3D) appearance drawing of the top surface of the work piece 50, multiple loading regions (LR) are formed on and protrude from the top surface of the work piece 50 to form multiple high point regions and low point regions.

With reference to Fig. 4, the flatness-parameter inputting step comprises inputting a flatness-parameter according to a desired flatness (F) of the top surface of the work piece 50.

The surface-finishing step comprises calculating out the positions, the lengths, the widths and the depths of the to-be-scraped ranges of the top surface of the work piece 50 according to the flatness-parameter and the three-dimensional appearance drawing of the top surface of the work piece 50 by the computer 20. When the positions of the to-be-scraped ranges of the top surface of the work piece 50 have been calculated out by the computer 20, a scraping route is planned by the computer 20 according to the positions of the to-be-scraped ranges of the top surface of the work piece 50 and is transformed into a route signal. The route signal is transmitted to the multi-axis machine tool 10 to control the movements of the spindle 11 and the loading platform 12 to position the auto scraping apparatus 40 and the work piece 50. When the scraping signals of lengths, widths and depths are transformed from the lengths, the widths and the depths of the to-be-scraped ranges of the top surface of the work piece 50, the scraping signals of lengths, widths and depths are transmitted to the auto scraping apparatus 40 to scrape the top surface of the work piece 50 to reach the desired flatness (F) that is set in the flatness-parameter inputting step.

With reference to Fig. 5, in the related-parameter inputting step, a desired points per square inch (PPI) and a desired contacting ratio per square inch (POP) are inputted in the computer 20, the scraping intervals (A) between the to-be-scraped ranges of the top surface of the work piece 50 are set to the same. Then, the work piece 50 has amount of n in the length (L) and amount of m in the width (W) as shown in the equation (1):

$$n=L/A \quad m=W/A \ldots\ldots\ldots\ldots\ldots\ldots\ldots\ldots\ldots\ldots\ldots\ldots\ldots\ldots\ldots\ldots\ldots\ldots(1)$$

The total number of points of the work piece 50 is shown as in the equation (2):

$$m(n-1)+n(m-1)+2(n+m) \qquad (2)$$

The desired points per square inch (PPI) is shown as in the equation (3):

$$PPI = m(n-1)+n(m-1)+2(n+m)/L \bullet W \qquad (3)$$

The desired contacting ratio per square inch (POP) is shown as in the equation (4):

$$POP = (1-(2 \times L_k \times W_k - W_k{}^2)/A^2) \times 100\% \qquad (4)$$

In the equation (4), $L_k$ is the length of a single scraping process and the unit of length of $L_k$ may be millimeter, the $W_k$ is the width of a single scraping process and the unit of length of $W_k$ may be millimeter.

In addition, $L_k$ can be claculated as shown in equation (5):

$$L_k = (L+W) + \sqrt{(L+W)^2 + 8(PPI \times L^2 \times W^2)} / \sin\theta \times 2(PPI \times L \times W) \qquad (5)$$

After calculating out the length ($L_k$) of a single scraping process by inserting the equation (3) into the equation (5), the length ($L_k$) of a single scraping process is substituted into the equation (4) to calculate out the width ($W_k$) of a single scraping process.

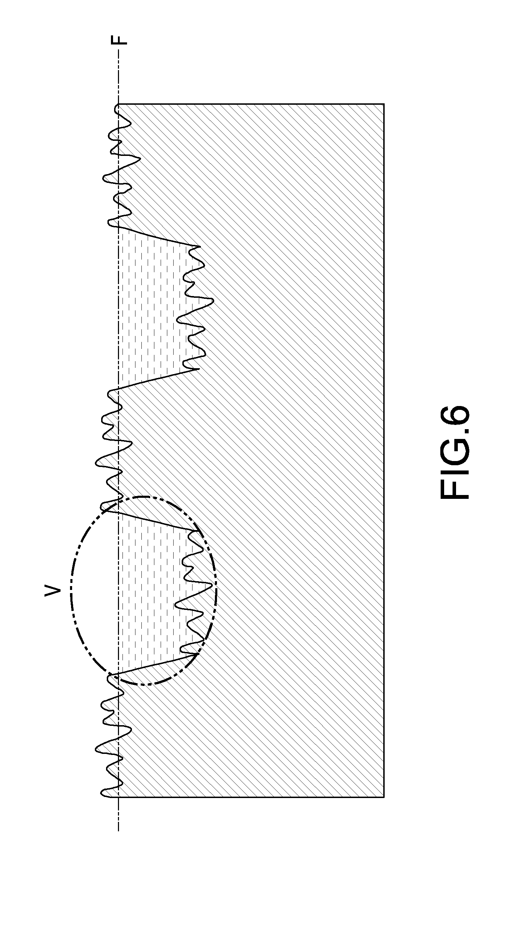

In addition, the Height of Point (HOP), the Depth of Surrounding (DOS) and the oil content (V) of the top surface of the work piece 50 can be calculated out according to a calculating program. With reference to Fig. 4, the Height of Point (HOP) is an average height value of the high point regions and the Depth of Surrounding (DOS) is an average depth of the low point regions. With reference to Fig. 6, the oil content is the volumes of stored oil in the top surface of the work piece 50 under the desired flatness (F) of the top surface of the work piece 50.

The Height of Point (HOP), the Depth of Surrounding (DOS) and the oil content (V) of the work piece 50 can be respectively shown as in equations (6), (7) and (8):

$$HOP = (H_1 + H_2 + \ldots\ldots + H_i)/n \qquad (6)$$

In the equation (6), $H_i$ is the average height value of each high point region and $i=1,2...n$.

$$DOS = (D_1 + D_2 + \ldots\ldots + D_i)/n \qquad (7)$$

In the equation (7), $D_i$ is the average depth value of each low point region and $i=1,2...n$.

$$OIL = \sum_{i}^{n} V_i \qquad (8)$$

In the equation (8), OIL is the oil content (V) and $V_i$ is the volume of the low point region on the top surface of the work piece 50.

When the length ($L_k$) and the width ($W_k$) of a single scraping process and the oil content (V) are calculated out by the above-mentioned equations, the depth ($Z_k$) of a single scraping process can be calculated out and the unit of length of $Z_k$ may be millimeter.

Furthermore, the length ($L_k$), the width ($W_k$) and the depth ($Z_k$) of a single scraping process can be controlled by the X- and Z-axis motors of the auto scraping apparatus 40, thereinto the feed of the Z-axis motor of the auto scraping apparatus 40 will influence the magnitudes of the width ($W_k$) and the depth ($Z_k$) of a single scraping process, and the feed of the X-axis motor of the auto scraping apparatus 40 will influence the magnitude of the length ($L_k$) of a single scraping process. Additionally, a related-constant (K) exists between the depth ($Z_k$) and the width ($W_k$) of a single scraping process is shown as in equation (9):

$$Z_k = W_k \times K \qquad\qquad (9)$$

The auto-scraping step comprises calculating out the positions and a scraping route of the to-be-scraped ranges of the top surface of the work piece 50 by the computer 20 to meet the requirement of oil-even-distribution according to the desired points per square inch (PPI) and the desired contacting ratio per square inch (POP), and transforming the positions and a scraping route of the to-be-scraped ranges of the top surface of the work piece 50 into position signals and a route signal. Then, the position signals and the route signal are respectively transmitted to the multi-axis machine tool 10 and the auto scraping apparatus 40 to enable the auto scraping apparatus 40 to scrape the top surface of the work piece 50 to meet the requirement of oil-even-distribution.

The analyzing step comprises scanning the top surface of the work piece 50 after the auto-scraping step, forming a 3D-appearance drawing by the scanning data in the computer 20 and detecting the 3D-appearance drawing of the work piece 50 that has been scraped with the preceding step. If the 3D-appearance drawing of the work piece 50 meets the requirement of oil-even-distribution, the numerical-control scraping procedure of the present invention is finished. If the 3D-appearance drawing of the work piece 50 fails to meet the requirement of oil-even-distribution, the operating process is returned repeatedly to the flatness-parameter inputting step or the related-parameter inputting step to adjust the parameters until the 3D-appearance drawing of the work piece 50 meets the requirement of oil-even-distribution.

The method of numerical-control scraping of a work piece in accordance with the present invention only needs to put a work piece 50 on the loading platform 12 and the laser displacement meter 30 can scan the top surface of the work piece 50 and a 3D-appearance drawing of the work piece 50 is formed in the computer 20 by the scanning data, and the auto scraping apparatus 40 can automatically scrape the work piece 50 according to the desired flatness of the top surface of the work piece 50. After scraping the top surface of the work piece 50 in the surface-finishing step, the auto scraping apparatus 40 is driven by the computer 20 to scrape the top surface of the work piece 50 according to the desired PPI and the POP and the HOP, the DOS and the oil content to enable the auto scraping apparatus 40 to scrape the top surface of the work piece 50 to meet the requirement of oil-even-distribution.

If the 3D-appearance drawing of the work piece 50 fails to meet the requirement of oil-even-distribution. the operating process is returned repeatedly to the flatness-parameter inputting step or the related-parameter inputting step to adjust the parameters until the 3D-appearance drawing of the work piece 50 meets the requirement of oil-even-distribution.

Therefore, the method of numerical-control scraping of a work piece in accordance with the present invention can scrape the top surface of the work piece 50 accurately by the numerical computation of the computer 20 and the operations of the multi-axis machine tool 10, the laser displacement meter 30 and the auto scraping apparatus 40.

**Claims**

1. A method of numerical-control scraping of a work piece comprising:

    a preparing step comprising:

        preparing a multi-axis machine tool (10), a work piece (50), a laser displacement meter (30), an auto scraping apparatus (40) and a computer (20);
        mounting a spindle (11) movably on a top of the multi-axis machine tool (10) along the Z-axis of the multi-axis machine tool (10) with a bottom;
        mounting a loading platform (12) movably on a bottom of the multi-axis machine tool (10) along the X-Y axes of the multi-axis machine tool (10) below the spindle (11);
        mounting the work piece (50) securely on the loading platform (12) below the spindle with a top surface;
        mounting the laser displacement meter (30) securely on the bottom of the spindle (11) above the loading platform (12);
        mounting the auto scraping apparatus (40) securely on the bottom of the spindle (11) beside the laser displacement meter (30) to scrape the top surface of the work piece (50); and
        connecting the computer (20) electrically to the multi-axis machine tool (10) to control the movements of the spindle (11) and the loading platform (12), to the laser displacement meter (30) to receive the measurement results of the top surface of the work piece (50) and to the auto scraping apparatus (40) to enable the auto scraping apparatus (40) to scrape the top surface of the work piece (50);

a scanning step comprising:

moving the loading platform (12) along the X-Y axes of the multi-axis machine tool (10) relative to the spindle (11) to enable the laser displacement meter (30) to scan the variation of the top surface of the work piece (50); reading out of the roughness values of the top surface of the work piece (50) by the laser displacement meter (30); and
transferring the roughness values of the top surface of the work piece (50) to the computer (20) to form a three-dimensional appearance drawing of the top surface of the work piece (50) in the computer (20);

a flatness-parameter inputting step comprising inputting a flatness-parameter according to a desired flatness of the top surface of the work piece (50);
a surface-finishing step comprising:

calculating out the positions, the lengths, the widths and the depths of the to-be-scraped ranges of the top surface of the work piece (50) according to the flatness-parameter and the three-dimensional appearance drawing of the top surface of the work piece (50) by the computer (20);
planning a scraping route by the computer (20) according to the positions of the to-be-scraped ranges of the top surface of the work piece (50) and transforming the scraping route into a route signal;
transmitting the route signal to the multi-axis machine tool (10) to control the movements of the spindle (11) and the loading platform (12) to position the auto scraping apparatus (40) and the work piece (50);
tranforming the scraping signals of lengths, widths and depths of the top surface of the work piece (50) from the lengths, the widths and the depths of the to-be-scraped ranges of the top surface of the work piece (50); and
transmitting the scraping signals of lengths, widths and depths of the top surface of the work piece (50) to the auto scraping apparatus (40) to scrape the top surface of the work piece (50) to reach the desired flatness that is set in the flatness-parameter inputting step;

a related-parameter inputting step comprising:

inputting a desired points per square meter and a desired contacting ratio per square meter in the computer (20);
calculating out the Height of Point, the Depth of Surrounding and the oil content of the top surface of the work piece (50) according to an adjusted data of the auto scraping apparatus (40);
calculating out the length and the width of a single scraping process of the auto scraping apparatus (40); and
calculating out the depth of a single scraping process of the auto scraping apparatus (40) according to the oil content of the top surface of the work piece (50) and the length and the width of a single scraping process of the auto scraping apparatus (40);

an auto-scraping step comprising:

calculating out the positions and a scraping route of the to-be-scraped ranges of the top surface of the work piece (50) by the computer (20) to meet the requirement of oil-even-distribution according to the desired points per square meter and the desired contacting ratio per square inch;
transforming the positions and a scraping route of the to-be-scraped ranges of the top surface of the work piece (50) into the position signals and a route signal; and
transmitting the position signals and the route signal respectively to the multi-axis machine tool (10) and the auto scraping apparatus (40) to enable the auto scraping apparatus (40) to scrape the top surface of the work piece (50) to meet the requirement of oil-even-distribution and

an analyzing step comprising:

scanning the top surface of the work piece (50) after the auto-scraping step;
forming a 3D-appearance drawing by the scanning data in the computer (20); and
detecting the 3D-appearance drawing of the work piece (50) that has been scraped with the preceding step, if the 3D-appearance drawing of the work piece (50) meets the requirement of oil-even-distribution the numerical-control scraping procedure being finished and if the 3D-appearance drawing of the work piece (50) fails to meet the requirement of oil-even-distribution the operating process being returned repeatedly to the flatness-parameter inputting step or the related-parameter inputting step to adjust the parameters until the 3D-appearance drawing of the work piece (50) meets the requirement of oil-even-distribution.

2. The method as claimed in claim 1, wherein in the preparing step, a height of the spindle (11) is adjusted relative to the loading platform (12) by the multi-axis machine tool (10) to let the valid measurement range of the laser displacement meter (30) cover the whole top surface of the work piece (50).

3. The method as claimed in claim 2, wherein in the scanning step, the loading platform (12) is moved relative to the spindle (11) at a constant speed along an S-shaped route to enable the laser displacement meter (30) to scan the top surface of the work piece (50).

4. The method as claimed in claim 3, wherein in the related-parameter inputting step, the Height of Point is an average height value of the high point regions of the top surface of the work piece (50) and the Depth of Surrounding is an average depth of the low point regions of the top surface of the work piece (50).

5. The method as claimed in claim 4, wherein in the related-parameter inputting step, the oil content is the volumes of stored oil in the top surface of the work piece (50) under the desired flatness of the top surface of the work piece (50).

6. The method as claimed in claim 1, wherein in the related-parameter inputting step, the Height of Point is an average height value of the high point regions of the top surface of the work piece (50) and the Depth of Surrounding is an average depth of the low point regions of the top surface of the work piece (50).

7. The method as claimed in claim 1, wherein in the related-parameter inputting step, the oil content is the volumes of stored oil in the top surface of the work piece (50) under the desired flatness of the top surface of the work piece (50).

**Patentansprüche**

1. Verfahren zum numerisch gesteuerten Schaben eines Werkstücks, umfassend:

einen Vorbereitungsschritt, umfassend:

Vorbereiten einer Mehrachsen-Werkzeugmaschine (10), eines Werkstücks (50), eines Laser-Verlagerungsmessers (30), einer automatischen Schabeinrichtung (40) und eines Computers (20);
bewegliches Anbringen einer Spindel (11) auf einer Oberseite der Mehrachsen-Werkzeugmaschine (10) entlang der Z-Achse der Mehrachsen-Werkzeugmaschine (10) mit einer Unterseite;
bewegliches Anbringen einer Ladeplattform (12) auf einer Unterseite der Mehrachsen-Werkzeugmaschine (10) entlang der X-Y-Achsen der Mehrachsen-Werkzeugmaschine (10) unter der Spindel (11);
sicheres Anbringen des Werkstücks (50) auf der Ladeplattform (12) unter der Spindel mit einer oberen Oberfläche;
sicheres Anbringen des Laser-Verlagerungsmessers (30) auf der Unterseite der Spindel (11) über der Ladeplattform (12);
sicheres Anbringen der automatischen Schabeinrichtung (40) auf der Unterseite der Spindel (11) neben dem Laser-Verlagerungsmesser (30), um die obere Oberfläche des Werkstücks (50) zu schaben; und
elektrisches Verbinden des Computers (20) mit der Mehrachsen-Werkzeugmaschine (10), um die Bewegungen der Spindel (11) und der Ladeplattform (12) zu steuern, mit dem Laser-Verlagerungsmesser (30), um die Messergebnisse der oberen Oberfläche des Werkstücks (50) zu empfangen, und mit der automatischen Schabeinrichtung (40), um die automatische Schabeinrichtung (40) in die Lage zu versetzen, die obere Oberfläche des Werkstücks (50) zu schaben;

einen Abtastschritt, umfassend:

Bewegen der Ladeplattform (12) entlang der X-Y-Achsen der Mehrachsen-Werkzeugmaschine (10) bezogen auf die Spindel (11), um den Laser-Verlagerungsmesser (30) in die Lage zu versetzen, die Unebenmäßigkeit der oberen Oberfläche des Werkstücks (50) abzutasten;
Auslesen der Rauheitswerte der oberen Oberfläche des Werkstücks (50) durch den Laser-Verlagerungsmesser (30); und
Übertragen der Rauheitswerte der oberen Oberfläche des Werkstücks (50) an den Computer (20), um im Computer (20) eine dreidimensionale Zeichnung des Erscheinungsbildes der oberen Oberfläche des Werkstücks (50) zu erstellen;

einen Ebenheitsparameter-Eingabeschritt, der das Eingeben eines Ebenheitsparameters gemäß einer gewünschten Ebenheit der oberen Oberfläche des Werkstücks (50) umfasst;
einen Oberflächenendbearbeitungsschritt, umfassend:

Errechnen der Positionen, der Längen, der Breiten und der Tiefen der zu schabenden Bereiche der oberen Oberfläche des Werkstücks (50) gemäß dem Ebenheitsparameter und der dreidimensionalen Zeichnung des Erscheinungsbildes der oberen Oberfläche des Werkstücks (50) durch den Computer (20);
Planen eines Schabweges durch den Computer (20) gemäß den Positionen der zu schabenden Bereiche der oberen Oberfläche des Werkstücks (50) und Umwandeln des Schabweges in ein Wegsignal;
Übertragen des Wegsignals an die Mehrachsen-Werkzeugmaschine (10), um die Bewegungen der Spindel (11) und der Ladeplattform (12) zu steuern, um die automatische Schabeinrichtung (40) und das Werkstück (50) zu positionieren;
Umwandeln der Schabsignale von Längen, Breiten und Tiefen der oberen Oberfläche des Werkstücks (50) aus den Längen, den Breiten und den Tiefen der zu schabenden Bereiche der oberen Oberfläche des Werkstücks (50); und
Übertragen der Schabsignale von Längen, Breiten und Tiefen der oberen Oberfläche des Werkstücks (50) an die automatische Schabeinrichtung (40), um die obere Oberfläche des Werkstücks (50) zu schaben, um die im Ebenheitsparameter-Eingabeschritt eingestellte, gewünschte Ebenheit zu erreichen;

einen Schritt des Eingebens verwandter Parameter, umfassend:

Eingeben einer gewünschten Punktzahl pro Quadratmeter und eines gewünschten Kontaktverhältnisses pro Quadratmeter in den Computer (20);
Errechnen der Punkthöhe, Umgebungstiefe und des Ölgehalts der oberen Oberfläche des Werkstücks (50) gemäß angepasster Daten der automatischen Schabeinrichtung (40);
Errechnen der Länge und der Breite eines einzelnen Schabprozesses der automatischen Schabeinrichtung (40); und
Errechnen der Tiefe eines einzelnen Schabprozesses der automatischen Schabeinrichtung (40) gemäß dem Ölgehalt der oberen Oberfläche des Werkstücks (50) und der Länge und der Breite eines einzelnen Schabprozesses der automatischen Schabeinrichtung (40);

einen automatischen Schabschritt, umfassend:

Errechnen der Positionen und eines Schabweges der zu schabenden Bereiche der oberen Oberfläche des Werkstücks (50) durch den Computer (20), um die Anforderung gleichmäßiger Ölverteilung gemäß der gewünschten Punktzahl pro Quadratmeter und dem gewünschten Kontaktverhältnis pro Quadratinch zu erfüllen;
Umwandeln der Positionen und eines Schabweges der zu schabenden Bereiche der oberen Oberfläche des Werkstücks (50) in die Positionssignale und ein Wegsignal; und
Übertragen der Positionssignale bzw. des Wegsignals an die Mehrachsen-Werkzeugmaschine (10) und die automatische Schabeinrichtung (40), um die automatische Schabeinrichtung (40) in die Lage zu versetzen, die obere Oberfläche des Werkstücks (50) zu schaben, um die Anforderung gleichmäßiger Ölverteilung zu erfüllen; und

einen Analyseschritt, umfassend:

Abtasten der oberen Oberfläche des Werkstücks (50) nach dem automatischen Schabschritt;
Erstellen einer 3D-Zeichnung des Erscheinungsbildes durch die Abtastdaten im Computer (20); und
Erkennen der 3D-Zeichnung des Erscheinungsbildes des mit dem vorangehenden Schritt geschabten Werkstücks (50) dahingehend, ob die 3D-Zeichnung des Erscheinungsbildes des Werkstücks (50) die Anforderung gleichmäßiger Ölverteilung erfüllt,

wobei, wenn der numerisch gesteuerte Schabvorgang abgeschlossen ist und die 3D-Zeichnung des Erscheinungsbildes des Werkstücks (50) die Anforderung gleichmäßiger Ölverteilung nicht erfüllt, der Betriebsprozess wiederholt zu dem Ebenheitsparameter-Eingabeschritt oder dem Schritt des Eingebens verwandter Parameter zurückgeführt wird, um die Parameter anzupassen, bis die 3D-Zeichnung des Erscheinungsbildes des Werkstücks (50) die Anforderung gleichmäßiger Ölverteilung erfüllt.

2. Verfahren nach Anspruch 1, wobei in dem Vorbereitungsschritt eine Höhe der Spindel (11) bezogen auf die Ladeplattform (12) durch die Mehrachsen-Werkzeugmaschine (10) angepasst wird, damit der gültige Messbereich des Laser-Verlagerungsmessers (30) die gesamte obere Oberfläche des Werkstücks (50) abdeckt.

3. Verfahren nach Anspruch 2, wobei in dem Abtastschritt die Ladeplattform (12) bezogen auf die Spindel (11) mit einer konstanten Geschwindigkeit entlang eines S-förmigen Weges bewegt wird, um den Laser-Verlagerungsmessers (30) in die Lage zu versetzen, die obere Oberfläche des Werkstücks (50) abzutasten.

4. Verfahren nach Anspruch 3, wobei in dem Schritt des Eingebens verwandter Parameter die Punkthöhe ein durchschnittlicher Höhenwert der Hochpunktbereiche der oberen Oberfläche des Werkstücks (50) ist und die Umgebungstiefe eine durchschnittliche Tiefe der Niedrigpunktbereiche der oberen Oberfläche des Werkstücks (50) ist.

5. Verfahren nach Anspruch 4, wobei in dem Schritt des Eingebens verwandter Parameter der Ölgehalt den Volumina gespeicherten Öls in der oberen Oberfläche des Werkstücks (50) bei der gewünschten Ebenheit der oberen Oberfläche des Werkstücks (50) entspricht.

6. Verfahren nach Anspruch 1, wobei in dem Schritt des Eingebens verwandter Parameter die Punkthöhe ein durchschnittlicher Höhenwert der Hochpunktbereiche der oberen Oberfläche des Werkstücks (50) ist und die Umgebungstiefe eine durchschnittliche Tiefe der Niedrigpunktbereiche der oberen Oberfläche des Werkstücks (50) ist.

7. Verfahren nach Anspruch 1, wobei in dem Schritt des Eingebens verwandter Parameter der Ölgehalt den Volumina gespeicherten Öls in der oberen Oberfläche des Werkstücks (50) bei der gewünschten Ebenheit der oberen Oberfläche des Werkstücks (50) entspricht.


**Revendications**

1. Procédé de raclage à commande numérique d'une pièce à travailler comprenant :

   une étape de préparation comprenant :

      la préparation d'une machine-outil à axes multiples (10), d'une pièce à travailler (50), d'un compteur de déplacement laser (30), d'un appareil de raclage automatique (40) et d'un ordinateur (20) ;
      le montage d'une broche (11) de façon mobile sur un dessus de la machine-outil à axes multiples (10) le long de l'axe Z de la machine-outil à axes multiples (10) avec un fond ;
      le montage d'une plate-forme de chargement (12) de façon mobile sur un fond de la machine-outil à axes multiples (10) le long des axes X-Y de la machine-outil à axes multiples (10) sous la broche (11);
      le montage de la pièce à travailler (50) de façon bien arrimée sur la plate-forme de chargement (12) sous la broche avec une surface supérieure ;
      le montage du compteur de déplacement laser (30) de façon bien arrimée sur le fond de la broche (11) au-dessus de la plate-forme de chargement (12) ;
      le montage de l'appareil de raclage automatique (40) de façon bien arrimée sur le fond de la broche (11) à côté du compteur de déplacement laser (30) afin de racler la surface supérieure de la pièce à travailler (50) ; et
      la connexion électrique de l'ordinateur (20) à la machine-outil à axes multiples (10) afin de commander les mouvements de la broche (11) et de la plate-forme de chargement (12), au compteur de déplacement laser (30) afin de recevoir les résultats de mesure de la surface supérieure de la pièce à travailler (50) et à l'appareil de raclage automatique (40) afin de permettre à l'appareil de raclage automatique (40) de racler la surface supérieure de la pièce à travailler (50) ;

   une étape de balayage comprenant :

      le déplacement de la plate-forme de chargement (12) le long des axes X-Y de la machine-outil à axes multiples (10) par rapport à la broche (11) pour permettre au compteur de déplacement laser (30) de balayer la variation de la surface supérieure de la pièce à travailler (50) ;
      la lecture des valeurs de rugosité de la surface supérieure de la pièce à travailler (50) grâce au compteur de déplacement laser (30) ; et

le transfert des valeurs de rugosité de la surface supérieure de la pièce à travailler (50) à l'ordinateur (20) pour former un dessin d'apparence tridimensionnelle de la surface supérieure de la pièce à travailler (50) dans l'ordinateur (20) ;

une étape d'entrée de paramètre de planéité comprenant l'entrée d'un paramètre de planéité selon une planéité souhaitée de la surface supérieure de la pièce à travailler (50) ;

une étape de finition de surface comprenant :

le calcul des positions, des longueurs, des largeurs et des profondeurs des plages à racler de la surface supérieure de la pièce à travailler (50) selon le paramètre de planéité et le dessin d'apparence tridimensionnelle de la surface supérieure de la pièce à travailler (50) par l'ordinateur (20) ;

la programmation d'un trajet de raclage par l'ordinateur (20) selon les positions des plages à racler de la surface supérieure de la pièce à travailler (50) et la transformation du trajet de raclage en un signal de trajet ;

la transmission du signal de trajet à la machine-outil à axes multiples (10) pour commander les mouvements de la broche (11) et de la plate-forme de chargement (12) afin de positionner l'appareil de raclage automatique (40) et la pièce à travailler (50) ;

la transformation des signaux de raclage de longueurs, largeurs et profondeurs de la surface supérieure de la pièce à travailler (50) à partir des longueurs, des largeurs et des profondeurs des plages à racler de la surface supérieure de la pièce à travailler (50) ; et

la transmission des signaux de raclage de longueurs, largeurs et profondeurs de la surface supérieure de la pièce à travailler (50) à l'appareil de raclage automatique (40) afin de racler la surface supérieure de la pièce à travailler (50) pour atteindre la planéité souhaitée qui est réglée à l'étape d'entrée de paramètre de planéité ;

une étape d'entrée de paramètre associé comprenant :

l'entrée de points par mètre carré souhaités et d'un rapport de contact souhaité par mètre carré dans l'ordinateur (20) ;

le calcul de la hauteur de point, de la profondeur de l'environnement et de la teneur en huile de la surface supérieure de la pièce à travailler (50) selon des données ajustées de l'appareil de raclage automatique (40) ;

le calcul de la longueur et de la largeur d'un processus de raclage unique de l'appareil de raclage automatique (40) ; et

le calcul de la profondeur d'un processus de raclage unique de l'appareil de raclage automatique (40) selon la teneur en huile de la surface supérieure de la pièce à travailler (50) et de la longueur et de la largeur d'un processus de raclage unique de l'appareil de raclage automatique (40) ;

une étape de raclage automatique comprenant :

le calcul des positions et d'un trajet de raclage des plages à racler de la surface supérieure de la pièce à travailler (50) par l'ordinateur (20) afin de satisfaire l'exigence de répartition homogène de l'huile selon les points par mètre carré souhaités et le rapport de contact par pouce carré souhaité ;

la transformation des positions et d'un trajet de raclage des plages à racler de la surface supérieure de la pièce à travailler (50) en les signaux de position et un signal de trajet ; et

la transmission des signaux de position et du signal de trajet respectivement à la machine-outil à axes multiples (10) et à l'appareil de raclage automatique (40) pour permettre à l'appareil de raclage automatique (40) de racler la surface supérieure de la pièce à travailler (50) afin de satisfaire l'exigence de répartition homogène de l'huile et

une étape d'analyse comprenant :

le balayage de la surface supérieure de la pièce à travailler (50) après l'étape de raclage automatique ;

la formation d'un dessin d'apparence 3D par les données de balayage dans l'ordinateur (20) ; et

la détection du dessin d'apparence 3D de la pièce à travailler (50) qui a été raclée avec l'étape précédente, si le dessin d'apparence 3D de la pièce à travailler (50) satisfait l'exigence de répartition homogène de l'huile, la procédure de raclage à commande numérique étant finie et si le dessin d'apparence 3D de la pièce à travailler (50) ne satisfait pas l'exigence de répartition homogène de l'huile, le processus fonctionnel étant renvoyé de façon répétée à l'étape d'entrée de paramètre de planéité ou à l'étape d'entrée de paramètre associé pour ajuster les paramètres jusqu'à ce que le dessin d'apparence 3D de la pièce à travailler (50) satisfasse l'exigence de répartition homogène de l'huile.

2. Procédé selon la revendication 1, dans lequel à l'étape de préparation, une hauteur de la broche (11) est ajustée par rapport à la plate-forme de chargement (12) par la machine-outil à axes multiples (10) afin de laisser la plage de mesures valide du compteur de déplacement laser (30) couvrir la totalité de la surface supérieure de la pièce à travailler (50).

3. Procédé selon la revendication 2, dans lequel à l'étape de balayage, la plate-forme de chargement (12) est déplacée par rapport à la broche (11) à une vitesse constante le long d'un trajet en forme de S pour permettre au compteur de déplacement laser (30) de balayer la surface supérieure de la pièce à travailler (50).

4. Procédé selon la revendication 3, dans lequel à l'étape d'entrée de paramètre associé, la hauteur de point est une valeur de hauteur moyenne de régions de point haut de la surface supérieure de la pièce à travailler (50) et la profondeur de l'environnement est une profondeur moyenne des régions de point bas de la surface supérieure de la pièce à travailler (50).

5. Procédé selon la revendication 4, dans lequel à l'étape d'entrée de paramètre associé, la teneur en huile représente les volumes d'huile stockée dans la surface supérieure de la pièce à travailler (50) à la planéité souhaitée de la surface supérieure de la pièce à travailler (50).

6. Procédé selon la revendication 1, dans lequel à l'étape d'entrée de paramètre associé, la hauteur de point est une valeur de hauteur moyenne des régions de point haut de la surface supérieure de la pièce à travailler (50) et la profondeur de l'environnement est une profondeur moyenne des régions de point bas de la surface supérieure de la pièce à travailler (50).

7. Procédé selon la revendication 1, dans lequel à l'étape d'entrée de paramètre associé, la teneur en huile représente les volumes d'huile stockée dans la surface supérieure de la pièce à travailler (50) à la planéité souhaitée de la surface supérieure de la pièce à travailler (50).

PREPARING STEP

↓

SCANNING STEP

↓

FLATHESSPARAMETER INPUTTING STEP

↓

SURFACE - FINISHING STEP

↓

RELATED - PARAMETER INPUTTING STEP(PPI,POP, HOP,DOS,OIL CONTENT)

↓

AUTO - SCRAPING STEP

↓

OIL - UNEVEN - DISTRIBUTION ← ANALYZING STEP

↓

OIL-EVEN-DISTRIBUTION

↓

FINISH

FIG.1

FIG.2

40

FIG.3

FIG.4

FIG.5

FIG.6

**EP 2 624 087 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110275280 A1